# FASCICULE DE BREVET EUROPEEN

(11) **EP 3 209 874 B1**
(45) Date de publication et mention de la délivrance du brevet: **26.09.2018**
(21) Numéro de dépôt: 15798497.2
(22) Date de dépôt: 19.10.2015
(51) Int. Cl.: F02K 9/50, F02K 9/94, F02K 9/95

(54) **PROCEDE D'ALLUMAGE AMELIORE POUR MOTEUR A ERGOLS LIQUIDES**
VERBESSERTES ZÜNDVERFAHREN FÜR FLÜSSIGKEITSTRIEBWERK
IMPROVED IGNITION METHOD FOR LIQUID PROPELLANT ENGINE

(30) Priorité: 21.10.2014 FR 1460126
(43) Date de publication de la demande: 30.08.2017
(73) Titulaire: ARIANEGROUP SAS, 75015 Paris (FR)
(72) Inventeur: HUE, Valentin, F-27200 Vernon (FR)
(74) Mandataire: Gilbey, Vincent
(86) Numéro de dépôt international: PCT/FR2015/052793
(87) Numéro de publication internationale: WO 2016/062949

(56) Documents cités:
- EP-A1- 1 241 341
- WO-A1-2014/029937
- FR-A1- 2 976 626
- US-A1- 2006 145 022

## Description

### DOMAINE TECHNIQUE GENERAL

La présente invention concerne le domaine des allumeurs pour l'initiation de la combustion dans les chambres de combustion de moteurs d'engins spatiaux.

### ETAT DE L'ART

Les chambres de combustion n'utilisant pas de couples d'ergols hypergoliques nécessitent l'utilisation d'un allumeur pour initier la combustion. Or, les ergols hypergoliques sont plus délicats à manipuler que les ergols non hypergoliques, et donc l'utilisation d'ergols non hypergoliques couplés à un allumeur présente toujours un intérêt.

On connait ainsi les allumeurs utilisant les ergols du cycle moteur pour initier la combustion dans la chambre de combustion. De tels allumeurs permettent ainsi d'effectuer des rallumages, et de ne pas nécessiter des ergols spécifiques à l'allumage.

Cependant, de tels allumeurs nécessitent que les ergols arrivent sous forme gazeuse dans l'allumeur afin d'assurer la stabilité de la combustion, et que cette alimentation en ergols sous forme gazeuse soit reproductible pour des rallumages pouvant se produire dans des conditions (notamment thermiques) très variables et difficilement contrôlables.

De plus, de tels allumeurs sont couplés avec le cycle moteur. En effet, les ergols injectés dans l'allumeur étant prélevés dans les ergols utilisés pour le cycle moteur, les débits d'ergols injectés dans l'allumeur dépendent donc des débits d'ergols injectés dans la chambre de combustion pour le cycle moteur.

Un allumeur et un procédé d'allumage d'un moteur fusée sont connus du document WO 2014/029937.

La présente invention vise ainsi à proposer une solution améliorant au moins partiellement ces aspects.

### PRESENTATION DE L'INVENTION

A cet effet, la présente invention propose un procédé de démarrage de combustion d'un moteur d'engin spatial, dans lequel
- on allume un réchauffeur des réservoirs d'un premier et d'un second ergol,
- on effectue une temporisation de manière à atteindre un régime stable du réchauffeur,
- on pressurise un premier réservoir contenant le premier ergol sous forme liquide jusqu'à une première pression seuil au moyen du réchauffeur, et en parallèle, on remplit un premier réservoir d'allumeur du premier ergol sous forme gazeuse, jusqu'à ce que des premières valeurs seuils d'allumage de température et de pression soient atteintes,
- on pressurise un second réservoir contenant le second ergol sous forme liquide, jusqu'à une seconde pression seuil au moyen du réchauffeur, et en parallèle, on remplit un second réservoir d'allumeur du second ergol sous forme gazeuse, jusqu'à ce que des secondes valeurs seuils d'allumage de température et de pression soient atteintes,
- on injecte les premier et second ergols sous forme gazeuse contenus dans les premier et second réservoirs d'allumeur dans un allumeur du moteur, de manière à initier la combustion.

Le premier ergol est par exemple de l'oxygène liquide, et le second ergol est par exemple de l'hydrogène liquide.

Selon un mode de réalisation particulier, suite à l'initiation de la combustion, on met en marche le moteur de l'engin spatial.

La pressurisation du premier réservoir et la pressurisation du second réservoir sont typiquement réalisées successivement ou simultanément.

L'invention concerne également un système comprenant
- un premier réservoir d'ergol liquide et un second réservoir d'ergol liquide,
- un allumeur de moteur d'engin spatial, alimenté en ergols gazeux par un premier réservoir d'allumeur et un second réservoir d'allumeur,
- un réchauffeur adapté pour réaliser une mise sous pression du premier réservoir d'ergol liquide et du second réservoir d'ergol liquide,
- un contrôleur, adapté pour piloter le réchauffeur de manière à ce qu'il réalise une mise sous pression des premier et second réservoirs d'ergol liquide par le réchauffeur en régime stable,
le système étant caractérisé en ce que le contrôleur et le réchauffeur sont configurés pour,
lors de la mise sous pression du premier réservoir d'ergol liquide, alimenter avec le premier ergol sous forme gazeuse le premier réservoir d'allumeur jusqu'à ce que des valeurs seuils d'allumage de température et de pression soient atteintes,
lors de la mise sous pression du second réservoir d'ergol liquide, alimenter avec le second ergol sous forme gazeuse le second réservoir d'allumeur jusqu'à ce que des valeurs seuils d'allumage de température et de pression soient atteintes,
le contrôleur étant également configuré de manière à injecter le contenu du premier réservoir d'allumeur et du second réservoir d'allumeur dans l'allumeur de moteur d'engin spatial de manière à initier la combustion.

Le premier ergol est par exemple de l'oxygène liquide, et le second ergol est par exemple de l'hydrogène liquide.

Le contrôleur est typiquement configuré de manière à piloter la mise en marche du moteur d'engin spatial suite à l'initiation de la combustion par l'injection du contenu du premier réservoir d'allumeur et du second réservoir d'allumeur dans l'allumeur de moteur d'engin spatial.

Le contrôleur est typiquement configuré de manière à piloter le réchauffeur de manière à ce que l'alimentation du premier réservoir d'allumeur et l'alimentation du second réservoir d'allumeur soient réalisées successivement ou simultanément.

Selon un exemple,
- le premier réservoir d'allumeur est relié à l'allumeur par une première vanne d'allumage, et au réchauffeur par une première vanne d'alimentation,
- le second réservoir d'allumeur est relié à l'allumeur par une seconde vanne d'allumage, et au réchauffeur par une seconde vanne d'alimentation,
le contrôleur étant adapté pour piloter l'ouverture et la fermeture des première et seconde vannes d'allumage et d'alimentation.

L'invention concerne en outre un engin spatial comprenant un moteur à ergols liquides ainsi qu'un système tel que présenté précédemment.

### PRESENTATION DES FIGURES

D'autres caractéristiques, buts et avantages de l'invention ressortiront de la description qui suit, qui est purement illustrative et non limitative, et qui doit être lue en regard des figures annexées, sur lesquelles :
- La figure 1 illustre schématiquement un système selon un aspect de l'invention
- La figure 2 illustre schématiquement un procédé selon un aspect de l'invention ;
- La figure 3 illustre schématiquement une variante du procédé illustré sur la figure 2.

Sur l'ensemble des figures, les éléments en commun sont repérés par des références numériques identiques.

### DESCRIPTION DETAILLEE

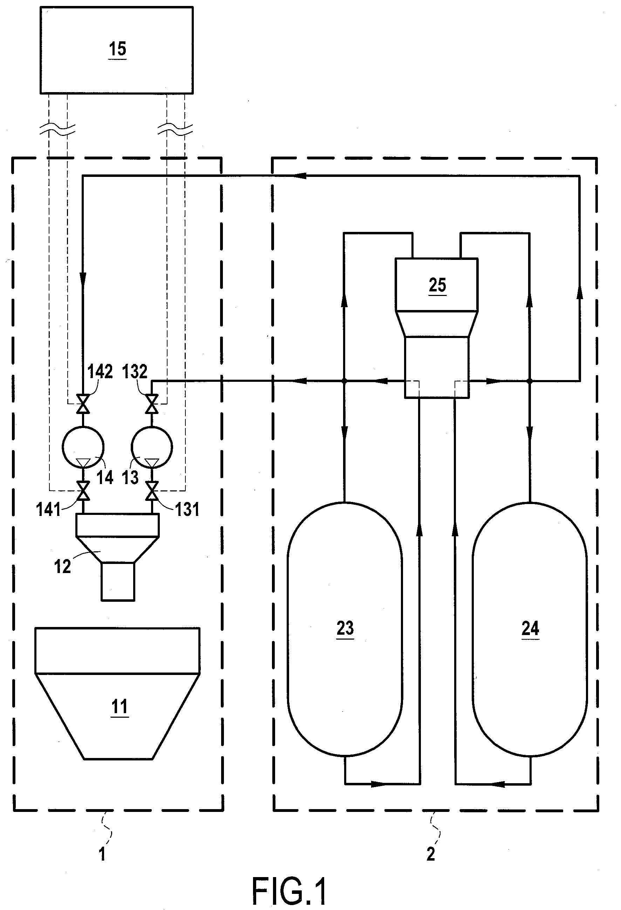

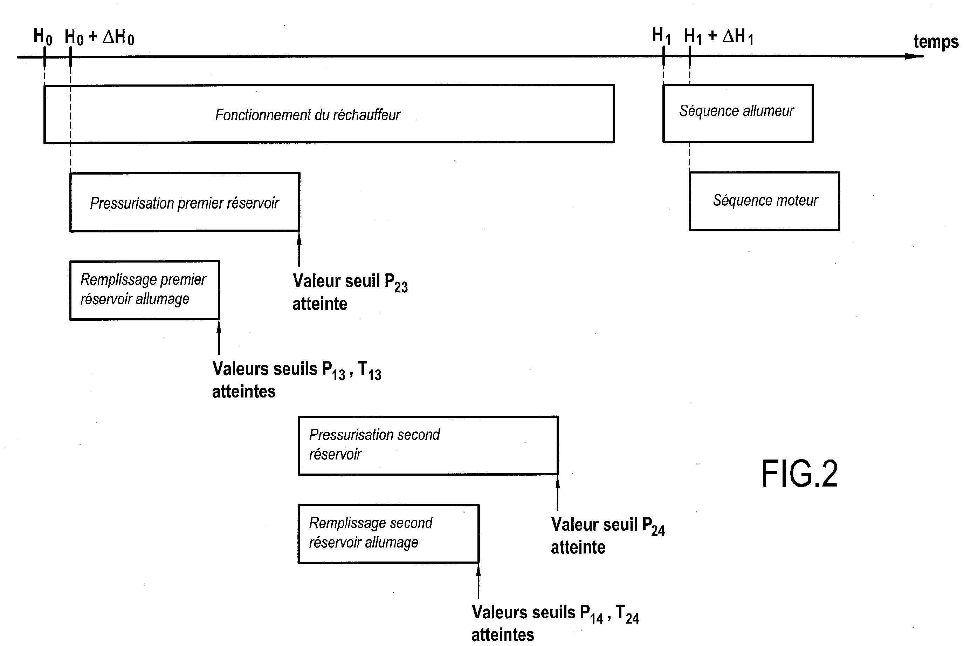

La figure 1 présente un système selon un aspect de l'invention, et la figure 2 illustre un procédé de démarrage de combustion d'un tel système.

Le système tel que présenté comprend un dispositif de combustion 1 et un dispositif de stockage 2.

Le dispositif de combustion 1 comprend une chambre de combustion 11, un allumeur 12, un premier réservoir d'allumeur 13 et un second réservoir d'allumeur 14.

Le premier réservoir d'allumeur 13 et le second réservoir d'allumeur 14 sont chacun reliés à l'allumeur 12 au moyen de vannes, respectivement une première vanne d'allumage 131 et une seconde vanne d'allumage 141, et sont adaptés pour contenir des ergols sous forme gazeuse, et ainsi réaliser une alimentation en ergols gazeux de l'allumeur 12.

Le dispositif de stockage 2 comprend un premier réservoir d'ergol 23 et un second réservoir d'ergol 24, adaptés pour contenir respectivement un premier et un second ergol.

Le dispositif de stockage comprend également un réchauffeur 25, adapté pour réaliser une mise sous pression des premier et second réservoirs d'ergol 23 et 24, de manière à y appliquer une pression prédéterminée. La structure d'un tel réchauffeur 25 est bien connue, et ne sera pas décrite en détail. Il s'agit de manière générale d'un équipement comprenant un échangeur de chaleur permettant de réchauffer des ergols tels que de d'hydrogène et de l'oxygène, ainsi qu'un gaz neutre tel que de l'hélium qui est utilisé pour mettre sous pression les réservoirs 23 et 24.

Le système selon l'invention exploite ce réchauffeur 25 en le reliant au premier réservoir d'allumeur 13 et au second réservoir d'allumeur 14, de manière à permettre de les remplir au moyen d'ergols gazeux prélevés en sortie du réchauffeur 25.

Le premier réservoir d'allumeur 13 est ainsi relié au réchauffeur 25 par une première vanne d'alimentation 132, tandis que le second réservoir d'allumeur 14 est relié au réchauffeur 25 par une seconde vanne d'alimentation 142.

Le système selon l'invention crée ainsi un lien entre l'allumeur 12 et le dispositif de stockage 2, et exploite des éléments existant, en l'occurrence le réchauffeur 25, pour le remplissage en ergols gazeux du premier réservoir d'allumeur 13 et du second réservoir d'allumeur 14.

Le système comprend également un contrôleur 15, adapté pour piloter l'ouverture et la fermeture des vannes 131, 132, 141 et 142.

On décrit ci-après un exemple de fonctionnement de ce système, en référence à la figure 2.

On définit un instant initial H0 comme étant l'instant de départ du procédé.

A cet instant H0, on met en marche le réchauffeur 25.

Après une durée d'attente ΔH0 permettant au réchauffeur 25 d'atteindre un régime de fonctionnement stable, typiquement de l'ordre de quelques secondes, on pressurise le premier réservoir 23 contenant un premier ergol sous forme liquide jusqu'à une première pression seuil P23.

En parallèle à cette mise sous pression du premier réservoir 23, on remplit le premier réservoir d'allumage 13 du premier ergol sous forme gazeuse, qui est prélevé dans le réchauffeur 25. Le contrôleur 15 ouvre ainsi la première vanne d'alimentation 132 jusqu'à ce que des valeurs seuils de température et de pression P13 et T13 soient atteintes dans le premier réservoir d'allumage 13. Une fois ces conditions atteintes, le contrôleur 15 ferme la première vanne d'alimentation 132, et le premier réservoir d'allumage 13 contient ainsi un premier ergol sous forme gazeuse, à des conditions de température T13 et de pression T13 prédéterminées.

Les réservoirs d'allumage 13 et 14 sont typiquement de dimensions moindres par rapport aux réservoirs 23 et 24 ; leur remplissage est donc typiquement effectué sur une durée plus courte que la mise sous pression des réservoirs 23 et 24. La figure 2 et sa description sont basées sur cette hypothèse. Le remplissage du premier réservoir d'allumage 13 est avantageusement réalisé pendant la pressurisation du premier réservoir 23. Le remplissage du premier réservoir d'allumage 13 peut débuter de manière simultanée à la pressurisation du premier réservoir 23, ou de manière légèrement décalée dans le temps. Le remplissage du premier réservoir d'allumage 13 est avantageusement réalisé de manière à être achevé avant que la pressurisation du premier réservoir 23 soit achevée.

Une fois le premier réservoir 23 mis sous pression et le premier réservoir d'allumage 13 rempli, on réalise la mise sous pression du second réservoir 24 et le remplissage du second réservoir d'allumage 14.

On pressurise ainsi le second réservoir 24 contenant un second ergol sous forme liquide à l'aide du réchauffeur 25 jusqu'à une première pression seuil P24.

En parallèle à cette mise sous pression du second réservoir 24, on remplit le second réservoir d'allumage 14 du second ergol sous forme gazeuse, qui est prélevé dans le réchauffeur 25. Le contrôleur 15 ouvre ainsi la seconde vanne d'alimentation 142 jusqu'à ce que des valeurs seuils de température et de pression P14 et T14 soient atteintes dans le second réservoir d'allumage 14. Une fois ces conditions atteintes, le contrôleur 15 ferme la seconde vanne d'alimentation 142, et le second réservoir d'allumage 14 contient ainsi un second ergol sous forme gazeuse, à des conditions de température T14 et de pression T14 prédéterminées.

Le remplissage du second réservoir d'allumage 14 est avantageusement réalisé pendant la pressurisation du second réservoir 24. Le remplissage du second réservoir d'allumage 14 peut débuter de manière simultanée à la pressurisation du second réservoir 24, ou de manière légèrement décalée dans le temps. Le remplissage du second réservoir d'allumage 14 est avantageusement réalisé de manière à être achevé avant que la pressurisation du second réservoir 24 soit achevée.

Les différentes valeurs seuils de pression et de température, P23, P24, P13, P14, T13 et T14 sont définies notamment en fonction de la nature des ergols utilisés, et des caractéristiques de l'allumeur 12 ou plus généralement d'un moteur d'engin spatial intégrant le système présenté.

Une fois le second réservoir 24 mis sous pression et le second réservoir d'allumage 14 rempli, le réchauffeur 25 peut être arrêté.

A un instant H1, on déclenche une séquence d'allumage de la combustion, durant laquelle les ergols gazeux contenus dans le premier réservoir d'allumage 13 et le second réservoir d'allumage 14 sont injectés dans l'allumeur 12 afin d'initier la combustion.

L'injection est typiquement réalisée au moyen du contrôleur 15 qui pilote l'ouverture de la première vanne d'allumage 131 et de la seconde vanne d'allumage 141.

Dans la mesure où les ergols gazeux contenus dans les premier et second réservoirs d'allumage 13 et 14 sont à des conditions prédéterminées de température et de pression, l'initiation de la combustion peut être réalisée de manière fiable.

Après une durée ΔH1 correspondant à la durée de la séquence d'allumage, et donc de l'initiation de la combustion, une séquence moteur correspondant au fonctionnement du moteur comprenant le système présenté est engagée.

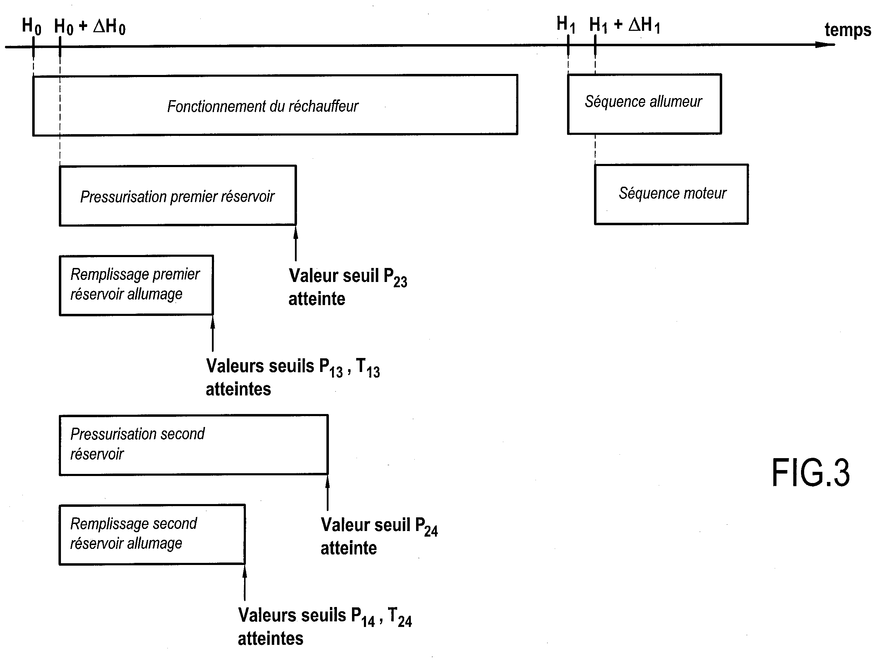

La figure 3 présente une variante du mode de réalisation du procédé illustré sur la figure 2, dans lequel la pressurisation du second réservoir 24 et le remplissage du second remplissage d'allumage 14 sont effectués simultanément à la pressurisation du premier réservoir 23 et au remplissage du premier remplissage d'allumage 13.

L'instant H1 dans ce mode de réalisation peut alors typiquement intervenir plus tôt que dans le mode de réalisation précédent.

Les durées de remplissage des réservoirs d'allumage 13 et 14 peuvent être distinctes ou identiques. De même, les durées de pressurisation des réservoirs 23 et 24 peuvent être distinctes ou identiques.

Les remplissages des réservoirs 23 et 24 et les pressurisations des réservoirs d'allumage 13 et 14 peuvent ainsi être réalisés successivement, simultanément, ou encore de manière à se chevaucher. La pressurisation du second réservoir 24 et le remplissage du second réservoir d'allumage 14 peuvent par exemple débuter alors que la pressurisation du premier réservoir 23 et/ou le remplissage du premier réservoir d'allumage 13 ne sont pas achevés, ou inversement.

Le système et le procédé ainsi décrits présentent plusieurs effets avantageux.

En premier lieu, le remplissage des premier et second réservoirs d'allumage 13 et 14 est réalisé de manière maitrisée, de sorte que les conditions de température et de pression y soient prédéfinies, ce qui permet une reproductibilité des conditions thermodynamiques des ergols utilisés pour l'allumage, et permet donc une fiabilisation de l'allumage.

Par ailleurs, l'alimentation en ergols de l'allumeur 12 est ici découplée du cycle de fonctionnement du moteur, ce qui permet de piloter la séquence d'allumage et la séquence moteur de manière quasi indépendantes.

Enfin, le système et le procédé présentés exploitent des éléments déjà présents dans un moteur d'engin spatial, et ne nécessitent que très peu de composants spécifiques, ce qui est avantageux en termes de masse et de coût.

## Revendications

1. Procédé de démarrage de combustion d'un moteur d'engin spatial, dans lequel
- on allume un réchauffeur (25) des réservoirs (23, 24) d'un premier et d'un second ergol,
- on effectue une temporisation de manière à atteindre un régime stable du réchauffeur (25),
- on pressurise un premier réservoir (23) contenant le premier ergol sous forme liquide jusqu'à une première pression seuil (P23) au moyen du réchauffeur (25), et en parallèle, on remplit un premier réservoir d'allumeur (13) du premier ergol sous forme gazeuse, jusqu'à ce que des premières valeurs seuils d'allumage de température (T13) et de pression (P13) soient atteintes,
- on pressurise un second réservoir (24) contenant le second ergol sous forme liquide, jusqu'à une seconde pression seuil (P24) au moyen du réchauffeur (25), et en parallèle, on remplit un second réservoir d'allumeur (14) du second ergol sous forme gazeuse, jusqu'à ce que des secondes valeurs seuils d'allumage de température (T14) et de pression (P14) soient atteintes,
- on injecte les premier et second ergols sous forme gazeuse contenus dans les premier (13) et second (14) réservoirs d'allumeur dans un allumeur (12) du moteur, de manière à initier la combustion.

2. Procédé selon la revendication 1, dans lequel le premier ergol est de l'oxygène liquide, et le second ergol est de l'hydrogène liquide.

3. Procédé selon l'une des revendications 1 ou 2, dans lequel suite à l'initiation de la combustion, on met en marche le moteur de l'engin spatial.

4. Procédé selon l'une des revendications 1 à 3 dans lequel la pressurisation du premier réservoir (23) et la pressurisation du second réservoir (24) sont réalisées successivement.

5. Procédé selon l'une des revendications 1 à 3 dans lequel la pressurisation du premier réservoir (23) et la pressurisation du second réservoir (24) sont réalisées simultanément.

6. Système comprenant
- un premier réservoir (23) d'ergol liquide et un second réservoir (24) d'ergol liquide,
- un allumeur (12) de moteur d'engin spatial, alimenté en ergols gazeux par le premier réservoir d'allumeur (13) et le second réservoir d'allumeur (14),
- un réchauffeur (25) adapté pour réaliser une mise sous pression du premier réservoir (23) d'ergol liquide et du second réservoir (24) d'ergol liquide,
le premier réservoir d'allumeur (13) étant relié à l'allumeur (12) par une première vanne d'allumage (131), et au réchauffeur par une première vanne d'alimentation (132),
le second réservoir d'allumeur (14) étant relié à l'allumeur (12) par une seconde vanne d'allumage (141), et au réchauffeur par une seconde vanne d'alimentation (142),
- un contrôleur (15) adapté pour piloter l'ouverture et la fermeture des première et seconde vannes d'allumage et d'alimentation (131, 132, 141 et 142), et pour piloter le réchauffeur (25) de manière à ce qu'il réalise une mise sous pression des premier (23) et second (24) réservoirs d'ergol liquide par le réchauffeur (25) en régime stable,
le système étant **caractérisé en ce que** le contrôleur (15) et le réchauffeur (25) sont configurés pour,
lors de la mise sous pression du premier (23) réservoir d'ergol liquide, alimenter avec le premier ergol sous forme gazeuse le premier réservoir d'allumeur (13) jusqu'à ce que des valeurs seuils d'allumage de température (T13) et de pression (P13) soient atteintes,
lors de la mise sous pression du second (24) réservoir d'ergol liquide, alimenter avec le second ergol sous forme gazeuse le second réservoir d'allumeur (14) jusqu'à ce que des valeurs seuils d'allumage de température (T14) et de pression (P14) soient atteintes,
le contrôleur (15) étant configuré de manière à piloter l'ouverture de la première vanne d'allumage (131) et de la seconde vanne d'allumage (141) de manière à injecter le contenu du premier réservoir d'allumeur (13) et du second réservoir d'allumeur (14) dans l'allumeur (12) de moteur d'engin spatial de manière à initier la combustion.

7. Système selon la revendication 6, dans lequel le premier ergol est de l'oxygène liquide, et le second ergol est de l'hydrogène liquide.

8. Système selon l'une des revendications 6 ou 7, dans lequel le contrôleur (15) est configuré de manière à piloter la mise en marche du moteur d'engin spatial suite à l'initiation de la combustion par l'injection du contenu du premier réservoir d'allumeur (13) et du second réservoir d'allumeur (14) dans l'allumeur (12) de moteur d'engin spatial.

9. Système selon l'une des revendications 6 à 8, dans lequel le contrôleur (15) est configuré de manière à piloter le réchauffeur (25) de manière à ce que l'alimentation du premier réservoir d'allumeur (13) et l'alimentation du second réservoir d'allumeur (14) soient réalisées successivement ou simultanément.

10. Engin spatial comprenant un moteur à ergols liquides ainsi qu'un système selon l'une des revendications 6 à 9.

## Patentansprüche

1. Verfahren zum Starten der Verbrennung eines Raumfahrzeugmotors, wobei
- ein Heizer (25) der Tanks (23, 24) eines ersten und eines zweiten Treibstoffs gezündet wird,
- eine Verzögerung so vorgenommen wird, dass ein stabiler Betriebszustand des Heizers (25) erreicht wird,
- ein erster Tank (23), der den ersten Treibstoff in flüssiger Form enthält, mittels des Heizers (25) bis zu einem ersten Schwellendruck (P23) unter Druck gesetzt wird und parallel dazu ein erster Zündertank (13) mit dem ersten Treibstoff in gasförmiger Form gefüllt wird, bis erste Zündschwellenwerte von Temperatur (T13) und von Druck (P13) erreicht werden,
- ein zweiter Tank (24), der den zweiten Treibstoff in flüssiger Form enthält, mittels des Heizers (25) bis zu einem zweiten Schwellendruck (P24) unter Druck gesetzt wird und parallel dazu ein zweiter Zündertank (14) mit dem zweiten Treibstoff in gasförmiger Form gefüllt wird, bis zweite Zündschwellenwerte von Temperatur (T14) und von Druck (P14) erreicht werden,
- der erste und der zweite gasförmige Treibstoff, die in dem ersten (13) und dem zweiten (14) Zündertank enthalten sind, in einen Zünder (12) des Motors so eingespritzt werden, dass die Verbrennung ausgelöst wird.

2. Verfahren gemäß Anspruch 1, wobei der erste Treibstoff flüssiger Sauerstoff ist und der zweite Treibstoff flüssiger Wasserstoff ist.

3. Verfahren gemäß einem der Ansprüche 1 oder 2, wobei im Anschluss an das Auslösen der Verbrennung der Motor des Raumfahrzeugs in Betrieb gesetzt wird.

4. Verfahren gemäß einem der Ansprüche 1 bis 3, wobei das Unterdrucksetzen des ersten Tanks (23) und das Unterdrucksetzen des zweiten Tanks (24) nacheinander durchgeführt werden.

5. Verfahren gemäß einem der Ansprüche 1 bis 3, wobei das Unterdrucksetzen des ersten Tanks (23) und das Unterdrucksetzen des zweiten Tanks (24) gleichzeitig durchgeführt werden.

6. System, umfassend
- einen ersten Flüssigtreibstoff-Tank (23) und einen zweiten Flüssigtreibstoff-Tank (24),
- einen Zünder (12) des Raumfahrzeugmotors, der durch den ersten Zündertank (13) und den zweiten Zündertank (14) mit gasförmigen Treibstoff versorgt wird,
- einen Heizer (25), der geeignet ist, um ein Unterdrucksetzen des ersten Flüssigtreibstoff-Tanks (23) und des zweiten Flüssigtreibstoff-Tanks (24) durchzuführen,
wobei der erste Zündertank (13) mit dem Zünder (12) über ein erstes Zündungsventil (131) und mit dem Heizer über ein erstes Versorgungsventil (132) verbunden ist,
wobei der zweite Zündertank (14) mit dem Zünder (12) über ein zweites Zündungsventil (141) und mit dem Heizer über ein zweites Versorgungsventil (142) verbunden ist,
- eine Steuerung (15), die dazu ausgelegt ist, das Öffnen und das Schließen der ersten und zweiten Zündungs- und Versorgungsventile (131, 132, 141 und 142) zu steuern und den Heizer (25) derart zu steuern, dass er ein Unterdrucksetzen des ersten (23) und zweiten (24) Flüssigtreibstoff-Tanks durch den Heizer (25) im stabilen Betriebszustand durchführt,
wobei das System **dadurch gekennzeichnet ist, dass** die Steuerung (15) und der Heizer (25) dazu konfiguriert sind,
beim Unterdrucksetzen des ersten Flüssigtreibstoff-Tanks (23) den ersten Zündertank (13) mit dem ersten gasförmigen Treibstoff zu versorgen, bis Zündschwellenwerte von Temperatur (T13) und von Druck (P13) erreicht sind,
beim Unterdrucksetzen des zweiten Flüssigtreibstoff-Tanks (24) den zweiten Zündertank (14) mit dem zweiten gasförmigen Treibstoff zu versorgen, bis Zündschwellenwerte von Temperatur (T14) und von Druck (P14) erreicht sind,
wobei die Steuerung (15) dazu konfiguriert ist, das Öffnen des ersten Zündungsventils (131) und des zweiten Zündungsventils (141) zu steuern, um den Inhalt des ersten Zündertanks (13) und des zweiten Zündertanks (14) in den Zünder (12) des Raumfahrzeugmotors so einzuspritzen, dass die Verbrennung ausgelöst wird.

7. System gemäß Anspruch 6, wobei der erste Treibstoff flüssiger Sauerstoff ist und der zweite Treibstoff flüssiger Wasserstoff ist.

8. System gemäß einem der Ansprüche 6 oder 7, wobei die Steuerung (15) dazu konfiguriert ist, das Einschalten des Raumfahrzeugmotors im Anschluss an das Auslösen der Verbrennung durch Einspritzen des Inhalts des ersten Zündertanks (13) und des zweiten Zündertanks (14) in den Zünder (12) des Raumfahrzeugmotors zu steuern.

9. System gemäß einem der Ansprüche 6 bis 8, wobei die Steuerung (15) dazu konfiguriert ist, den Heizer (25) derart zu steuern, dass die Versorgung des ersten Zündertanks (13) und die Versorgung des zweiten Zündertanks (14) nacheinander oder gleichzeitig durchgeführt werden.

10. Raumfahrzeug, umfassend einen Flüssigtreibstoffmotor und ein System gemäß einem der Ansprüche 6 bis 9.

## Claims

1. A method of starting combustion in a space vehicle engine, the method comprising:
• igniting a heater (25) for heating tanks (23, 24) for first and second propellants;
• waiting until the heater (25) reaches stable conditions;
• pressurizing a first tank (23) containing the first propellant in liquid form up to a first threshold pressure (P23) by means of the heater (25), and in parallel filling a first igniter tank (13) with the first propellant in gaseous form, until reaching first ignition threshold values of temperature (T13) and of pressure (P13) ;
• pressurizing a second tank (24) containing the second propellant in liquid form up to a second threshold pressure (P24) by means of the heater (25), and in parallel filling a second igniter tank (14) with the second propellant in gaseous form, until reaching second ignition threshold values of temperature (T14) and of pressure (P14); and
• injecting the first and second propellants in gaseous form contained in the first (13) and second (14) igniter tanks into an igniter (12) of the engine, so as to initiate combustion.

2. A method according to claim 1, wherein the first propellant is liquid oxygen and the second propellant is liquid hydrogen.

3. A method according to claim 1 or claim 2, wherein, after initiating combustion, the space vehicle engine is put into operation.

4. A method according to any one of claims 1 to 3, wherein the pressurization of the first tank (23) and the pressurization of the second tank (24) are performed in succession.

5. A method according to any one of claims 1 to 3, wherein the pressurization of the first tank (23) and the pressurization of the second tank (24) are performed simultaneously.

6. A system comprising:
• a first tank (23) of liquid propellant and a second tank (24) of liquid propellant;
• a space vehicle engine igniter (12) fed with gaseous propellants by the first igniter tank (13) and the second igniter tank (14);
• a heater (25) for pressurizing the first tank (23) of liquid propellant and the second tank (24) of liquid propellant; and
• the first igniter tank (13) being connected to the igniter (12) via a first igniter valve (131) and to the heater via a first feed valve (132);
• the second igniter tank (14) being connected to the igniter (12) via a second igniter valve (141) and to the heater via a second feed valve (142);
• a controller (15) adapted to control the opening and closing of the first and second igniter and feed valves (131, 132, 141, and 142) and to control the heater (25) so as to pressurize the first (23) and second (24) liquid propellant tanks by the heater (25) under stable conditions;
the system being **characterized in that** the controller (15) and the heater (25) are configured:
• while pressurizing the first liquid propellant tank (23), to feed the first propellant in gaseous form to the first igniter tank (13) until reaching threshold ignition values of temperature (T13) and of pressure (P13);
• while pressurizing the second liquid propellant tank (24), to feed the second propellant in gaseous form to the second igniter tank (14) until reaching threshold ignition values of temperature (T14) and of pressure (P14); and
• the controller (15) being configured in such a manner as to control the opening of the first ignition valve (131) and of the second ignition valve (141) in such a manner as to inject the contents of the first igniter tank (13) and of the second igniter tank (14) into the space vehicle engine igniter (12) so as to initiate combustion.

7. A system according to claim 6, wherein the first propellant is liquid oxygen and the second propellant is liquid hydrogen.

8. A system according to claim 6 or claim 7, wherein the controller (15) is configured to control putting the space vehicle engine into operation after initiation of combustion by injecting the contents of the first igniter tank (13) and of the second igniter tank (14) into the space vehicle engine igniter (12).

9. A system according to any one of claims 6 to 8, wherein the controller (15) is configured to control the heater (25) in such a manner that the first igniter tank (13) and the second igniter tank (14) are fed in succession or simultaneously.

10. A space vehicle including a liquid propellant engine and a system according to any one of claims 6 to 9.
